# EUROPÄISCHE PATENTSCHRIFT

(11) **EP 3 807 070 B1**
(45) Veröffentlichungstag und Bekanntmachung des Hinweises auf die Patenterteilung: **01.02.2023**
(21) Anmeldenummer: 19731191.3
(22) Anmeldetag: 11.06.2019
(51) Int. Cl.: B29C 45/37, B60N 2/68, B29C 45/14, B29C 45/26, B29L 31/00

(54) **VORRICHTUNG UND VERFAHREN ZUR HERSTELLUNG VON SITZSCHALEN FÜR FAHRZEUGSITZE**
DEVICE AND METHOD FOR PRODUCING SEAT SHELLS FOR VEHICLE SEATS
DISPOSITIF ET PROCÉDÉ POUR LA FABRICATION DE COQUES D'ASSISE POUR DES SIÈGES DE VÉHICULE

(30) Priorität: 13.06.2018 DE 102018209429
(43) Veröffentlichungstag der Anmeldung: 21.04.2021
(73) Patentinhaber: Adient US LLC, Plymouth, MI 48170 (US)
(72) Erfinder: JONAS, Jörg, 42489 Wülfrath (DE); REICHEL, Uwe, 67655 Kaiserslautern (DE); KRAMM, Lars, 67705 Trippstadt (DE)
(74) Vertreter: Liedhegener, Ralf
(86) Internationale Anmeldenummer: PCT/EP2019/065106
(87) Internationale Veröffentlichungsnummer: WO 2019/238621

(56) Entgegenhaltungen:
- DE-A1-102008 022 898
- DE-A1-102012 000 772
- DE-A1-102013 021 384
- ES-B2- 2 196 937
- GB-A- 2 216 842
- JP-A- S5 796 454

## Beschreibung

Die Erfindung betrifft eine Vorrichtung und ein Verfahren zur Herstellung von Sitzschalen für Fahrzeugsitze.

Aus dem Stand der Technik sind Vorrichtungen und Verfahren zur Herstellung von Sitzschalen für Fahrzeugsitze allgemein bekannt.

Die DE 10 2008 022 898 A1 offenbart eine Vorrichtung zur Herstellung von Sitzschalen für Fahrzeugsitze, umfassend ein Spritzgusswerkzeug, in welchem an ein Halbzeug eine Spritzgussmasse anspritzbar ist, um zumindest Seitenwangen der jeweiligen Sitzschale auszubilden.

Die DE 10 2012 000772 A offenbart ein Verfahren zur Herstellung von Sitzschalen für Fahrzeugsitze, wobei ein Organoblech mit einem thermoplastischen Kunststoff angespritzt wird.

Aus der GB 2 216 842 A ist eine Vorrichtung zur Herstellung von Schaumteilen für Fahrzeugsitze bekannt, die Vorrichtung umfassend ein Schäumwerkzeug zum Schäumen, wobei eine Kavität im Schäumwerkzeugs unter anderem in einem Ausformbereich für die Seitenwangen veränderbar ist, wobei Wechseleinsätze vorgesehen sind, die in das Schäumwerkzeug einsetzbar sind, um die Kavität im Schäumwerkzeug unter anderem im Ausformbereich für die Seitenwangen zu verändern.

Die DE 10 2013 021 384 A1 offenbart ein Strukturteil für eine Sitzanlage, insbesondere einen Fahrzeugsitz, eines Kraftwagens, wobei das Strukturteil aus wenigstens einem Organoblech gebildet ist.

Aufgabe der vorliegenden Erfindung ist es, eine gegenüber dem Stand der Technik verbesserte Vorrichtung und ein gegenüber dem Stand der Technik verbessertes Verfahren zur Herstellung von Sitzschalen für Fahrzeugsitze anzugeben.

Die Aufgabe wird erfindungsgemäß mit einer Vorrichtung zur Herstellung von Sitzschalen für Fahrzeugsitze mit den Merkmalen des Anspruchs 1 und einem Verfahren zur Herstellung von Sitzschalen für Fahrzeugsitze mit den Merkmalen des Anspruchs 4 gelöst.

Vorteilhafte Ausgestaltungen der Erfindung sind Gegenstand der Unteransprüche.

Eine erfindungsgemäße Vorrichtung zur Herstellung von Sitzschalen, auch als Sitzkissenschalen bezeichnet, für Fahrzeugsitze umfasst ein Spritzgusswerkzeug. In diesem Spritzgusswerkzeug ist an ein Halbzeug, insbesondere an ein Organoblech, eine Spritzgussmasse, insbesondere aus einem Kunststoff, insbesondere aus einem thermoplastischen Kunststoff, anspritzbar, um zumindest Seitenwangen der jeweiligen Sitzschale auszubilden. Eine Kavität im Spritzgusswerkzeug ist in einem Ausformbereich für die Seitenwangen veränderbar.

Die erfindungsgemäße Vorrichtung ermöglicht durch die veränderbare Kavität im Spritzgusswerkzeug eine kostengünstige Variantenbildung für Sitzschalen. Durch die erfindungsgemäße Lösung sind mit demselben Spritzgusswerkzeug verschiedene Ausführungsformen von Sitzschalen herstellbar, welche sich zumindest in ihrer Seitenwangenhöhe unterscheiden. Hierzu ist lediglich die Kavität im Spritzgusswerkzeug im Ausformbereich für die Seitenwangen entsprechend zu verändern.

Es sind Wechseleinsätze vorgesehen, die in das Spritzgusswerkzeug einsetzbar sind, um die Kavität im Spritzgusswerkzeug im Ausformbereich für die Seitenwangen zu verändern. Dadurch sind mit demselben Spritzgusswerkzeug verschiedene Ausführungsformen von Sitzschalen herstellbar, welche sich zumindest in ihrer Seitenwangenhöhe unterscheiden, wozu lediglich das Anordnen bzw. Entfernen der Wechseleinsätze erforderlich ist oder, bei Verwendung mehrerer Wechseleinsatztypen für die verschiedenen Seitenwangenhöhen, das Anordnen der Wechseleinsätze des jeweiligen Wechseleinsatztyps erforderlich ist.

Die Wechseleinsätze sind beispielsweise jeweils formschlüssig und/oder kraftschlüssig im Spritzgusswerkzeug befestigbar. Dadurch wird eine sichere Befestigung im Spritzgusswerkzeug ermöglicht und es wird sichergestellt, dass die Wechseleinsätze, wenn sie nicht benötigt werden oder gegen Wechseleinsätze eines anderen Wechseleinsatztyps ausgetauscht werden sollen, auf einfache Weise, insbesondere ohne Beschädigungen des Spritzgusswerkzeugs und der Wechseleinsätze, wieder aus dem Spritzgusswerkzeug entnehmbar sind.

In einer möglichen Ausführungsform sind mindestens zwei Wechseleinsatztypen vorgesehen, welche sich insbesondere in ihrer Höhe unterscheiden. Entsprechend der vorgesehenen auszubildenden Seitenwangenhöhe sind die Wechseleinsätze des jeweiligen Wechseleinsatztyps auswählbar und im Spritzgusswerkzeug anzuordnen. Vorteilhafterweise wird durch die Wechseleinsätze des Wechseleinsatztyps mit großer Höhe die Kavität im Ausformbereich für die Seitenwangen stärker reduziert, so dass die Ausführungsform der Sitzschale mit den niedrigen Seitenwangen herstellbar ist, und durch die Wechseleinsätze des Wechseleinsatztyps mit geringer Höhe wird die Kavität im Ausformbereich für die Seitenwangen weniger stark reduziert, so dass die Ausführungsform der Sitzschale mit den hohen Seitenwangen herstellbar ist.

Alternativ kann beispielsweise vorgesehen sein, dass Wechseleinsätze nur eines Wechseleinsatztyps vorhanden sind, wobei diese Wechseleinsätze in das Spritzgusswerkzeug eingesetzt werden, wenn Sitzschalen mit niedrigen Seitenwangen ausgebildet werden sollen, um die Kavität im Spritzgusswerkzeug im Ausformbereich für die Seitenwangen entsprechend zu reduzieren, und aus dem Spritzgusswerkzeug entfernt werden, wenn Sitzschalen mit hohen Seitenwangen hergestellt werden sollen, so dass dann im Spritzgusswerkzeug im Ausformbereich für die Seitenwangen die vollständige Kavität, insbesondere die vollständige Kavitätshöhe, des Spritzgusswerkzeugs zur Ausformung der hohen Seitenwangen zur Verfügung steht.

Die Ausführungsform der Sitzschale mit hohen Seitenwangen ist insbesondere eine sportliche Ausführungsform, bei welcher die Seitenwangen für einen größeren Seitenhalt höher ausgeformt sind. Die Ausführungsform der Sitzschale mit niedrigen Seitenwangen ist insbesondere eine Basisvariante. Die niedriger ausgebildeten Seitenwangen erleichtern ein Ein- und Aussteigen eines Insassen.

In einem erfindungsgemäßen Verfahren zur Herstellung von Sitzschalen für Fahrzeugsitze werden mittels dieser Vorrichtung mindestens zwei verschiedene Ausführungsformen von Sitzschalen hergestellt, welche sich in der Seitenwangenhöhe unterscheiden, indem die Kavität im Spritzgusswerkzeug im Ausformbereich für die Seitenwangen entsprechend der jeweils herzustellenden Ausführungsform der Sitzschale eingestellt wird. Daraus ergeben sich die bereits zur Vorrichtung geschilderten Vorteile. Insbesondere kann mittels des Verfahrens und durch Verwendung der Vorrichtung auf kostengünstige Weise eine Variantenbildung der Sitzschale erreicht werden, wobei sich die Varianten, d. h. die Ausführungsformen, der Sitzschale zumindest in der Seitenwangenhöhe unterscheiden. Hierzu ist lediglich die Kavität im Spritzgusswerkzeug im Ausformbereich für die Seitenwangen entsprechend der jeweils herzustellenden Ausführungsform der Sitzschale einzustellen.

In einer möglichen Ausführungsform des Verfahrens werden zur Veränderung der Kavität im Spritzgusswerkzeug im Ausformbereich für die Seitenwangen die Wechseleinsätze verwendet, wobei die Ausführungsform der Sitzschale mit niedrigen Seitenwangen hergestellt wird, indem im Spritzgusswerkzeug Wechseleinsätze angeordnet werden, und die Ausführungsform der Sitzschale mit hohen Seitenwangen hergestellt wird, indem im Spritzgusswerkzeug keine Wechseleinsätze angeordnet werden oder Wechseleinsätze eines anderen Wechseleinsatztyps angeordnet werden, die eine geringere Höhe aufweisen als die Wechseleinsätze, welche zur Herstellung der Ausführungsform der Sitzschale mit niedrigen Seitenwangen verwendet werden. Dadurch kann mittels des Verfahrens und durch Verwendung der Vorrichtung auf kostengünstige Weise die Variantenbildung der Sitzschale erreicht werden, wobei sich die Varianten, d. h. die Ausführungsformen, der Sitzschale zumindest in der Seitenwangenhöhe unterscheiden. Hierzu sind lediglich entsprechend der jeweils herzustellenden Ausführungsform der Sitzschale die Wechseleinsätze des jeweiligen Wechseleinsatztyps auszuwählen und im Spritzgusswerkzeug anzuordnen oder es sind, wenn Wechseleinsätze nur eines Wechseleinsatztyps vorgesehen sind, diese im Spritzgusswerkzeug anzuordnen, wenn die Ausführungsform der Sitzschale mit niedrigen Seitenwangen hergestellt werden soll, und aus dem Spritzgusswerkzeug zu entfernen, wenn die Ausführungsform der Sitzschale mit hohen Seitenwangen hergestellt werden soll.

Die jeweilige Sitzschale wird insbesondere hergestellt, indem ein Halbzeug, insbesondere ein Organoblech, in das Spritzgusswerkzeug eingelegt wird und eine Spritzgussmasse, insbesondere aus einem Kunststoff, insbesondere aus einem thermoplastischen Kunststoff, angespritzt wird, um zumindest die Seitenwangen der Sitzschale auszubilden. Dadurch wird ein Verbundbauteil ausgebildet, auch als Compositebauteil bezeichnet, welches eine hohe Festigkeit und Steifigkeit und ein geringes Gewicht aufweist und in einer für einen Insassen vorteilhaften Form ausgeformt ist.

Beispielsweise werden durch das Anspritzen der Spritzgussmasse zudem Versteifungsstrukturen, insbesondere Rippenstrukturen und/oder Wabenstrukturen, und/oder mindestens eine Aufnahme für ein am Fahrzeugsitz zu befestigendes Anbauteil oder mehrere solcher Aufnahmen für mehrere Anbauteile ausgebildet. Dadurch kann eine Festigkeit und Steifigkeit verbessert werden und/oder es können auf einfache Weise ein oder mehrere Anbauteile am Fahrzeugsitz befestigt werden.

Beispielsweise wird das Halbzeug vor dem Einlegen in das Spritzgusswerkzeug erwärmt, bis es verformbar wird, und vor dem Einlegen in das Spritzgusswerkzeug oder im Spritzgusswerkzeug umgeformt. Hierfür bietet sich als Halbzeug insbesondere das Organoblech an. Ein solches Organoblech, auch als Organosheet bezeichnet, ist ein Faserverbundbauteil, wobei das noch nicht geformte Organoblech insbesondere ein Faser-Matrix-Halbzeug ist, bestehend aus einem Fasergewebe oder Fasergelege, dass in einen thermoplastischen Kunststoff eingebettet ist. Das Organoblech ist warmumformbar, indem es, beispielsweise durch Infrarotlichtbestahlung, erwärmt wird und dann umgeformt wird, beispielsweise durch Einlegen in eine entsprechende Form, zum Beispiel durch Einlegen in das Spritzgusswerkzeug. Das Verbundbauteil aus dem Organoblech und der angespritzten Spritzgussmasse weist insbesondere ein geringes Gewicht und eine hohe Stabilität auf.

Die Herstellung der Sitzschale als Verbundbauteil erfolgt insbesondere in einer automatisierten Fertigung im so genannten One Shot Hybrid Molding Process, wobei das Verbundbauteil als Organoblech mit angespritzter Spritzgussmasse ausgebildet wird. Durch die veränderbare Kavität im Spritzgusswerkzeug im Ausformbereich für die Seitenwangen, insbesondere mittels der Wechseleinsätze, wird dabei eine einstellbare Höhe der Seitenwangen der Sitzschale erreicht, beispielsweise indem verschiedene Wechseleinsatzpypen verwendet werden, um die jeweilige Seitenwangenhöhe auszubilden, oder indem bei nur einem Wechseleinsatztyp die Wechseleinsätze in das Spritzgusswerkzeug eingesetzt werden, um die Ausführungsform der Sitzschale mit niedrigen Seitenwangen, d. h. mit geringer Seitenwangenhöhe, auszubilden, und aus dem Spritzgusswerkzeug entfernt werden, um die Ausführungsform der Sitzschale mit hohen Seitenwangen, d. h. mit großer Seitenwangenhöhe, auszubilden.

Die Sitzschale als Verbundbauteil bildet beispielsweise zusammen mit Metallbauteilen, insbesondere Stahlbauteilen, einen Sitzunterbau des Fahrzeugsitzes. Beide Konstruktionselemente sind lasttragend und derart ausgebildet, insbesondere designed, dass sie den Körper eines Fahrzeuginsassen einbetten und ein möglichst minimales Blockmaß darstellen.

Einbetten bedeutet, dass der Körper des Insassen vorteilhafterweise an allen Stellen einen gleichen Abstand zu diesen Konstruktionselementen, insbesondere zur Sitzschale, aufweist, wobei zwischen Insasse und diesen Konstruktionselementen, insbesondere der Sitzschale, vorteilhafterweise eine Polsterung angeordnet ist. Durch die freie Formgestaltungsmöglichkeit des Verbundbauteils, d. h. der Sitzschale, lässt sich die Gesäßkontur des Insassen mit gleichmäßiger Beabstandung einbetten.

Ein minimales Blockmaß bedeutet insbesondere einen minimalen Abstand von einer Unterkante einer Sitzschiene zum so genannten H-Punkt des Fahrzeugsitzes, d. h. dem Hüftpunkt. Dadurch werden eine tiefe Sitzposition und ein niedrigerer Schwerpunkt des Fahrzeugs erreicht. Dies ist insbesondere bei Sportsitzen vorteilhaft.

Durch die hohe Festigkeit und Steifigkeit der Metallbauteile wird das Verbundbauteil, d. h. die Sitzschale, in dynamischen Lastfällen entlastet. Die Metallbauteile sind insbesondere als ein Rohrrahmen ausgebildet. Die Kombination von Verbundbauteil, d. h. Sitzschale, und Rohrrahmen ist vorteilhafterweise derart ausgebildet, dass die Kräfte im Verbundbauteil und Rohrrahmen in einer Vorzugsrichtung abgeleitet werden.

Ausführungsbeispiele der Erfindung werden anhand von Zeichnungen näher erläutert. Dabei zeigen:
- Figur 1: schematisch eine perspektivische Darstellung eines Fahrzeugsitzes,
- Figur 2: schematisch eine perspektivische Darstellung einer Ausführungsform einer Sitzschale für einen Fahrzeugsitz,
- Figur 3: schematisch eine perspektivische Darstellung einer weiteren Ausführungsform einer Sitzschale für einen Fahrzeugsitz, und
- Figur 4: schematisch eine Schnittdarstellung einer Vorrichtung zur Herstellung von Sitzschalen für Fahrzeugsitze.

Einander entsprechende Teile sind in allen Figuren mit den gleichen Bezugszeichen versehen.

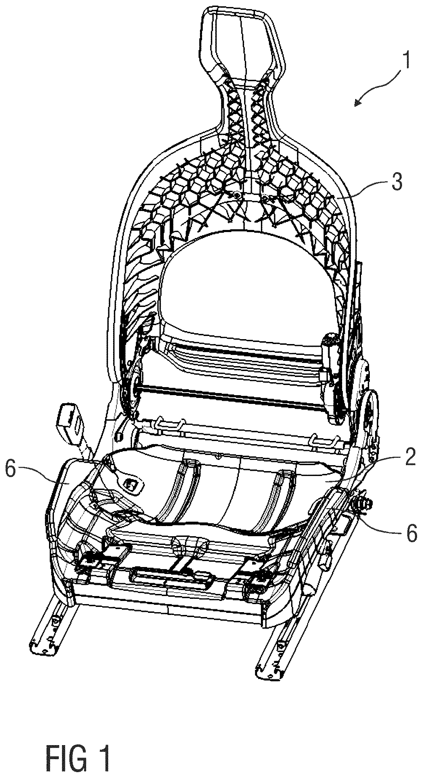

Figur 1 zeigt einen Fahrzeugsitz 1 in einer perspektivischen Darstellung. Der Fahrzeugsitz 1 umfasst eine Sitzschale 2, auch als Sitzkissenschale bezeichnet, und eine Sitzlehne 3.

Die Sitzschale 2 bildet zusammen mit Metallbauteilen, insbesondere Stahlbauteilen, die insbesondere in Form eines Rohrrahmens ausgebildet sind, einen Sitzunterbau für des Fahrzeugsitzes 1, auf welchem eine hier nicht dargestellte Polsterung angeordnet wird. Ähnliches gilt beispielsweise auch für die Sitzlehne 3.

Die Sitzschale 2 ist als ein Verbundbauteil ausgebildet, auch als Compositebauteil bezeichnet. Diese Sitzschale 2 ist in einer automatisierten Fertigung in einem so genannten One Shot Hybrid Molding Process herstellbar. Dabei wird an ein Halbzeug, insbesondere an ein Organoblech, auch als Organosheet bezeichnet, in einem Spritzgusswerkzeug 4 eine Spritzgussmasse angespritzt, insbesondere ein Kunststoff, insbesondere ein thermoplatischer Kunststoff.

Das Organoblech ist ein Faserverbundbauteil, wobei das noch nicht geformte Organoblech insbesondere ein Faser-Matrix-Halbzeug ist, bestehend aus einem Fasergewebe oder Fasergelege, dass in einen thermoplastischen Kunststoff eingebettet ist. Das Organoblech ist warmumformbar, indem es, beispielsweise durch Infrarotlichtbestahlung, erwärmt wird und dann umgeformt wird, beispielsweise durch Einlegen in eine entsprechende Form, zum Beispiel durch Einlegen in das Spritzgusswerkzeug 4. Die Sitzschale 2 als Verbundbauteil aus dem Organoblech und der angespritzten Spritzgussmasse weist insbesondere ein geringes Gewicht und eine hohe Stabilität auf.

Bei der Kombination aus Sitzschale 2 als Verbundbauteil und Metallbauteilen, insbesondere in Form des Rohrrahmens, für den Sitzunterbau sind diese beiden Konstruktionselemente lasttragend und derart designed, dass sie den Körper eines Insassen einbetten und ein möglichst minimales Blockmaß darstellen. Durch die hohe Steifigkeit und Festigkeit der Metallbauteile wird das Verbundbauteil, d. h. die Sitzschale 2, in dynamischen Lastfällen entlastet. Dabei ist die Kombination aus Verbundbauteil, d. h. Sitzschale 2, und Rohrrahmen beispielsweise derart gestaltet, dass die Kräfte im Verbundbauteil, d. h. in der Sitzschale 2, und im Rohrrahmen in eine Vorzugsrichtung abgeleitet werden. Durch die freie Formgestaltungsmöglichkeit der Sitzschale 2 als Verbundbauteil lässt sich die Gesäßkontur des Insassen bzw. eines Dummies mit gleichmäßiger Beabstandung einbetten.

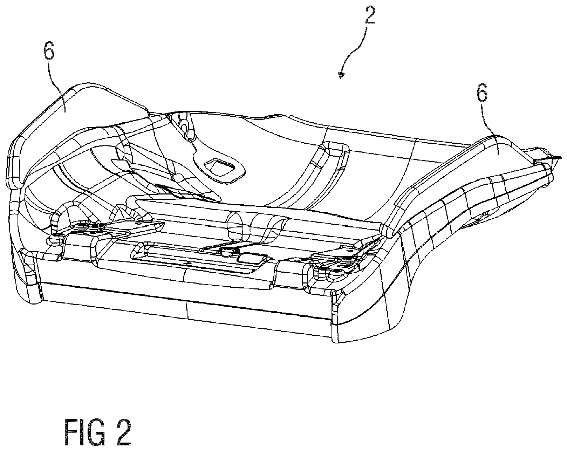

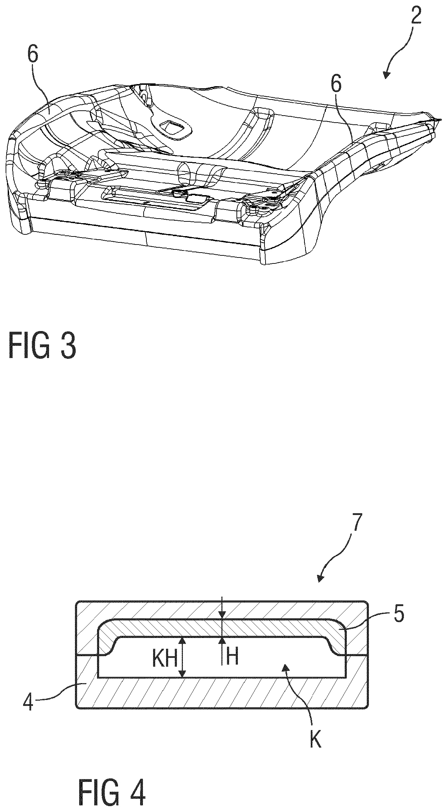

Die Sitzschale 2 ist, wie in den Figuren 2 und 3 gezeigt, derart gestaltet, dass durch eine Veränderung einer Kavität K im Spritzguss, insbesondere mittels Wechseleinsätzen 5 im Spritzgusswerkzeug 4, eine Höhe von Seitenwangen 6 der Sitzschale 2 variiert werden kann. Dadurch können beispielsweise mittels desselben Spritzgusswerkzeugs 4 mindestens zwei verschiedene Varianten, d. h. Ausführungsformen, der Sitzschale 2 hergestellt werden.

Eine dieser Ausführungsformen der Sitzschale 2, dargestellt in Figur 2, ist beispielsweise eine sportliche Variante, bei welcher die Seitenwangen 6 für einen besseren Seitenhalt höher ausgebildet sind. Die andere Ausführungsform der Sitzschale 2, dargestellt in Figur 3, ist beispielsweise eine Basisvariante, bei welcher die Seitenwangen 6 für ein leichteres Ein- und Aussteigen niedriger ausgebildet sind.

Eine Vorrichtung 7 zur Herstellung derartiger Sitzschalen 2 für Fahrzeugsitze 1 ist in Figur 4 schematisch stark vereinfacht in einer Schnittdarstellung gezeigt. Sie umfasst das Spritzgusswerkzeug 4, in welchem an das Halbzeug, insbesondere an das Organoblech, die Spritzgussmasse, insbesondere aus Kunststoff, insbesondere aus thermoplastischen Kunststoff, anspritzbar ist, um zumindest die Seitenwangen 6 der jeweiligen Sitzschale 2 auszubilden. Zur Herstellung der unterschiedlichen Ausführungsformen der Sitzschale 2, welche sich in der Seitenwangenhöhe unterscheiden, ist die Kavität K im Spritzgusswerkzeug 4 in einem Ausformbereich für die Seitenwangen 6 veränderbar.

Im hier dargestellten Beispiel sind hierfür die Wechseleinsätze 5 vorgesehen, die in das Spritzgusswerkzeug 4 einsetzbar sind, um die Kavität K im Spritzgusswerkzeug 4 im Ausformbereich für die Seitenwangen 6 zu verändern. Dabei ist vorteilhafterweise für den Ausformbereich für die jeweilige Seitenwange 6 jeweils ein Wechseleinsatz 5 vorgesehen, so dass bei Verwendung der Wechseleinsätze 5 zwei Wechseleinsätze 5 im Spritzgusswerkzeug 4 angeordnet sind. Diese beiden Wechseleinsätze 5 können miteinander verbunden sein, so dass sie beispielsweise gemeinsam in das Spritzgusswerkzeug 4 einsetzbar und aus diesem entnehmbar sind, oder sie können einzelne Elemente sein und somit separat in das Spritzgusswerkzeug 4 einsetzbar und aus diesem entnehmbar sein.

Es können beispielsweise mindestens zwei Wechseleinsatztypen vorgesehen sein, welche sich insbesondere in ihrer Höhe H unterscheiden. Entsprechend der vorgesehenen auszubildenden Seitenwangenhöhe sind die Wechseleinsätze 5 des jeweiligen Wechseleinsatztyps auswählbar und im Spritzgusswerkzeug 4 anzuordnen, wobei durch die Wechseleinsätze 5 des Wechseleinsatztyps mit großer Höhe H die Kavität K im Ausformbereich für die Seitenwangen 6 stärker reduziert wird, so dass die Ausführungsform der Sitzschale 2 mit den niedrigen Seitenwangen 6 herstellbar ist, und durch die Wechseleinsätze 5 des Wechseleinsatztyps mit geringer Höhe H die Kavität K im Ausformbereich für die Seitenwangen 6 weniger stark reduziert wird, so dass die Ausführungsform der Sitzschale 2 mit den hohen Seitenwangen 6 herstellbar ist.

Alternativ kann beispielsweise vorgesehen sein, dass Wechseleinsätze 5 nur eines Wechseleinsatztyps vorhanden sind, wobei diese Wechseleinsätze 5 in das Spritzgusswerkzeug 4 eingesetzt werden, wenn Sitzschalen 2 mit niedrigen Seitenwangen 6 ausgebildet werden sollen, um die Kavität K im Spritzgusswerkzeug 4 im Ausformbereich für die Seitenwangen 6 entsprechend zu reduzieren, und aus dem Spritzgusswerkzeug 4 entfernt werden, wenn Sitzschalen 2 mit hohen Seitenwangen 6 hergestellt werden sollen, so dass dann im Spritzgusswerkzeug 4 im Ausformbereich für die Seitenwangen 6 die vollständige Kavität K, insbesondere eine vollständige Kavitätshöhe KH, des Spritzgusswerkzeugs 4 zur Ausformung der hohen Seitenwangen 6 zur Verfügung steht.

Im hier dargestellten Beispiel sind Wechseleinsätze 5 im Spritzgusswerkzeug 4 angeordnet, um eine der Ausführungsformen der Sitzschale 2 herzustellen. Zur Herstellung der anderen Ausführungsform der Sitzschale 2 kann vorgesehen sein, entweder die Wechseleinsätze 5 aus dem Spritzgusswerkzeug 4 zu entfernen und diese Ausführungsform der Sitzschale 2 somit mit dem Spritzgusswerkzeug 4 ohne Wechseleinsätze 5 herzustellen, oder die Wechseleinsätze 5 gegen Wechseleinsätze 5 eines anderen Wechseleinsatztyps auszutauschen, d. h. die Wechseleinsätze 5 aus dem Spritzgusswerkzeug 4 zu entfernen und Wechseleinsätze 5 des anderen Wechseleinsatztyps in das Spritzgusswerkzeug 4 einzusetzen.

In einem Verfahren zur Herstellung von Sitzschalen 2 für Fahrzeugsitze 1 werden somit mittels dieser Vorrichtung 7 mindestens zwei verschiedene Ausführungsformen von Sitzschalen 2 hergestellt, welche sich in der Seitenwangenhöhe unterscheiden, indem die Kavität K im Spritzgusswerkzeug 4 im Ausformbereich für die Seitenwangen 6 entsprechend der jeweils herzustellenden Ausführungsform der Sitzschale 2 eingestellt wird.

Im hier dargestellten Beispiel wird die Ausführungsform der Sitzschale 2 mit niedrigen Seitenwangen 6 hergestellt, indem im Spritzgusswerkzeug 4 Wechseleinsätze 5 angeordnet werden, und die Ausführungsform der Sitzschale 2 mit hohen Seitenwangen 6 wird hergestellt, indem im Spritzgusswerkzeug 4 keine Wechseleinsätze 5 angeordnet werden oder Wechseleinsätze 5 eines anderen Wechseleinsatztyps angeordnet werden, die eine geringere Höhe H aufweisen als die Wechseleinsätze 5, welche zur Herstellung der Ausführungsform der Sitzschale 2 mit niedrigen Seitenwangen 6 verwendet werden.

D. h. wenn mehrere Wechseleinsatztypen verwendet werden und zur Herstellung beider Ausführungsformen der Sitzschale 2 Wechseleinsätze 5 verwendet werden, dann wird die Ausführungsform der Sitzschale 2 mit niedrigen Seitenwangen 6 hergestellt, indem im Spritzgusswerkzeug 4 Wechseleinsätze 5 angeordnet werden, die eine große Höhe H aufweisen, insbesondere eine größere Höhe H als die Wechseleinsätze 5, welche zur Herstellung der Ausführungsform der Sitzschale 2 mit hohen Seitenwangen 6 verwendet werden, um die Kavität K, insbesondere deren Kavitätshöhe KH, im Spritzgusswerkzeug 4 im Ausformbereich für die Seitenwangen 6 stark zu reduzieren, und die Ausführungsform der Sitzschale 2 mit hohen Seitenwangen 6 wird hergestellt, indem im Spritzgusswerkzeug 4 Wechseleinsätze 5 eines anderen Wechseleinsatztyps angeordnet werden, die eine geringere Höhe H aufweisen als die Wechseleinsätze 5, welche zur Herstellung der Ausführungsform der Sitzschale 2 mit niedrigen Seitenwangen 6 verwendet werden, um die Kavität K, insbesondere deren Kavitätshöhe KH, im Spritzgusswerkzeug 4 im Ausformbereich für die Seitenwangen 6 weniger stark zu reduzieren.

Die jeweilige Sitzschale 2 wird insbesondere hergestellt, indem das Halbzeug, insbesondere das Organoblech, in das Spritzgusswerkzeug 4 eingelegt wird und die Spritzgussmasse, insbesondere aus Kunststoff, insbesondere aus thermoplastischem Kunststoff, angespritzt wird, um zumindest die Seitenwangen 6 der Sitzschale 2 auszubilden.

Beispielsweise werden durch das Anspritzen der Spritzgussmasse zudem Versteifungsstrukturen, insbesondere Rippenstrukturen und/oder Wabenstrukturen, und/oder mindestens eine Aufnahme für ein am Fahrzeugsitz 1 zu befestigendes Anbauteil oder mehrere solcher Aufnahmen für mehrere Anbauteile ausgebildet.

Beispielsweise wird das Halbzeug, insbesondere das Organoblech, vor dem Einlegen in das Spritzgusswerkzeug 4, insbesondere durch Infrarotlichtbestrahlung, erwärmt, bis es verformbar wird, und vor dem Einlegen in das Spritzgusswerkzeug 4 oder im Spritzgusswerkzeug 4 umgeformt.

Durch die beschriebene Lösung, insbesondere durch Veränderbarkeit der Kavität K im Spritzgusswerkzeug 4 in einem Ausformbereich für die Seitenwangen 6, welche im hier dargestellten Beispiel mittels der Wechseleinsätze 5 für das Spritzgusswerkzeug 4 realisiert wird, wird eine kostengünstige Variantenbildung der Sitzschale 2 ermöglicht, da mit demselben Spritzgusswerkzeug 4 mehrere Ausführungsformen der Sitzschale 2 herstellbar sind, die sich insbesondere in der Seitenwangenhöhe unterscheiden.

### Bezugszeichenliste

- 1: Fahrzeugsitz
- 2: Sitzschale
- 3: Sitzlehne
- 4: Spritzgusswerkzeug
- 5: Wechseleinsatz
- 6: Seitenwange
- 7: Vorrichtung

- H: Höhe
- K: Kavität
- KH: Kavitätshöhe

## Patentansprüche

1. Vorrichtung (7) zur Herstellung von Sitzschalen (2) für
Fahrzeugsitze (1), umfassend ein Spritzgusswerkzeug (4), in welchem an ein Halbzeug, insbesondere an ein Organoblech, eine Spritzgussmasse, insbesondere aus einem Kunststoff, insbesondere aus einem thermoplastischen Kunststoff, anspritzbar ist, um zumindest Seitenwangen (6) der jeweiligen Sitzschale (2) auszubilden, **dadurch gekennzeichnet, dass**
eine Kavität (K) im Spritzgusswerkzeug (4) in einem Ausformbereich für die Seitenwangen (6) veränderbar ist, wobei Wechseleinsätze (5) vorgesehen sind, die in das Spritzgusswerkzeug (4) einsetzbar sind, um die Kavität (K) im Spritzgusswerkzeug (4) im Ausformbereich für die Seitenwangen (6) zu verändern.

2. Vorrichtung (7) nach Anspruch 1,
**dadurch gekennzeichnet, dass** die Wechseleinsätze (5) jeweils formschlüssig und/oder kraftschlüssig im Spritzgusswerkzeug (4) befestigbar sind.

3. Vorrichtung (7) nach Anspruch 1 oder 2,
**dadurch gekennzeichnet, dass** mindestens zwei Wechseleinsatztypen vorgesehen sind, welche sich insbesondere in ihrer Höhe (H) unterscheiden.

4. Verfahren zur Herstellung von Sitzschalen (2) für Fahrzeugsitze (1), wobei mittels der Vorrichtung (7) nach einem der vorhergehenden Ansprüche mindestens zwei verschiedene Ausführungsformen von Sitzschalen (2) hergestellt werden, welche sich in einer Seitenwangenhöhe unterscheiden, indem die Kavität (K) im Spritzgusswerkzeug (4) im Ausformbereich für die Seitenwangen (6) entsprechend der jeweils herzustellenden Ausführungsform der Sitzschale (2) eingestellt wird.

5. Verfahren nach Anspruch 4,
**dadurch gekennzeichnet, dass** die Ausführungsform der Sitzschale (2) mit niedrigen Seitenwangen (6) hergestellt wird, indem im Spritzgusswerkzeug (4) Wechseleinsätze (5) angeordnet werden, und die Ausführungsform der Sitzschale (2) mit hohen Seitenwangen (6) hergestellt wird, indem im Spritzgusswerkzeug (4) keine Wechseleinsätze (5) angeordnet werden oder Wechseleinsätze (5) eines anderen Wechseleinsatztyps angeordnet werden, die eine geringere Höhe (H) aufweisen als die Wechseleinsätze (5), welche zur Herstellung der Ausführungsform der Sitzschale (2) mit niedrigen Seitenwangen (6) verwendet werden.

6. Verfahren nach Anspruch 4 oder 5,
**dadurch gekennzeichnet, dass** die jeweilige Sitzschale (2) hergestellt wird, indem ein Halbzeug, insbesondere ein Organoblech, in das Spritzgusswerkzeug (4) eingelegt wird und eine Spritzgussmasse, insbesondere aus einem Kunststoff, insbesondere aus einem thermoplastischen Kunststoff, angespritzt wird, um zumindest die Seitenwangen (6) der Sitzschale (2) auszubilden.

7. Verfahren nach einem der Ansprüche 4 bis 6,
**dadurch gekennzeichnet, dass** durch das Anspritzen der Spritzgussmasse zudem Versteifungsstrukturen, insbesondere Rippenstrukturen und/oder Wabenstrukturen, und/oder mindestens eine Aufnahme für ein am Fahrzeugsitz (1) zu befestigendes Anbauteil ausgebildet werden.

8. Verfahren nach einem der Ansprüche 4 bis 7,
**dadurch gekennzeichnet, dass** das Halbzeug vor dem Einlegen in das Spritzgusswerkzeug (4) erwärmt wird, bis es verformbar wird, und vor dem Einlegen in das Spritzgusswerkzeug (4) oder im Spritzgusswerkzeug (4) umgeformt wird.

## Claims

1. Device (7) for producing seat shells (2) for vehicle seats (1), comprising an injection mould (4) in which an injection moulding compound, in particular made of a plastic, in particular made of a thermoplastic material, can be moulded onto a semifinished product, in particular onto an organometallic sheet, in order to form at least lateral pieces (6) of the respective seat shell (2), **characterized in that**
a cavity (K) in the injection mould (4) can be modified in a shaping region for the lateral pieces (6), wherein interchangeable inserts (5), which can be inserted into the injection mould (4) in order to modify the cavity (K) in the injection mould (4) in the shaping region for the lateral pieces (6), are provided.

2. Device (7) according to Claim 1,
**characterized in that** the interchangeable inserts (5) can each be secured in the injection mould (4) in a formfitting and/or force-fitting manner.

3. Device (7) according to Claim 1 or 2,
**characterized in that** at least two interchangeable insert types, which in particular have different heights (H), are provided.

4. Method for producing seat shells (2) for vehicle seats (1), wherein at least two different embodiments of seat shells (2), which have different lateral piece heights, are produced by the device (7) according to one of the preceding claims by adjusting the cavity (K) in the injection mould (4) in the shaping region for the lateral pieces (6) in accordance with the respective embodiment of the seat shell (2) that is to be produced.

5. Method according to Claim 4,
**characterized in that** the embodiment of the seat shell (2) with low lateral pieces (6) is produced by arranging interchangeable inserts (5) in the injection mould (4), and the embodiment of the seat shell (2) with high lateral pieces (6) is produced **in that**, in the injection mould (4), no interchangeable inserts (5) are arranged or interchangeable inserts (5) of a different interchangeable insert type, which have a lower height (H) than the interchangeable inserts (5) used to produce the embodiment of the seat shell (2) with low lateral pieces (6), are arranged.

6. Method according to Claim 4 or 5,
**characterized in that** the respective seat shell (2) is produced by inserting a semifinished product, in particular an organometallic sheet, into the injection mould (4) and moulding on an injection moulding compound, in particular made of a plastic, in particular made of a thermoplastic material, in order to form at least the lateral pieces (6) of the seat shell (2).

7. Method according to one of Claims 4 to 6,
**characterized in that** stiffening structures, in particular rib structures and/or honeycomb structures, and/or at least one receptacle for an attachment part to be secured to the vehicle seat (1) are also formed by the moulding on of the injection moulding compound.

8. Method according to one of Claims 4 to 7,
**characterized in that**, before it is inserted into the injection mould (4), the semifinished product is heated until it becomes deformable, and is formed before it is inserted into the injection mould (4) or in the injection mould (4).

## Revendications

1. Dispositif (7) pour la fabrication de coques de siège (2) pour des sièges de véhicule (1), comprenant un outil de moulage par injection (4), dans lequel une masse de moulage par injection, notamment en une matière plastique, notamment en une matière plastique thermoplastique, peut être injectée sur un produit semi-fini, notamment sur une tôle organique, afin de former au moins des joues latérales (6) de la coque de siège respective (2),
**caractérisé en ce que**
une cavité (K) dans l'outil de moulage par injection (4) peut être modifiée dans une zone de formage pour les joues latérales (6), des inserts interchangeables (5) étant prévus, qui peuvent être insérés dans l'outil de moulage par injection (4) afin de modifier la cavité (K) dans l'outil de moulage par injection (4) dans la zone de formage pour les joues latérales (6).

2. Dispositif (7) selon la revendication 1, **caractérisé en ce que** les inserts interchangeables (5) peuvent être fixés respectivement par complémentarité de forme et/ou par force dans l'outil de moulage par injection (4).

3. Dispositif (7) selon la revendication 1 ou 2, **caractérisé en ce qu'**au moins deux types d'inserts interchangeables sont prévus, qui se distinguent notamment par leur hauteur (H).

4. Procédé de fabrication de coques de siège (2) pour des sièges de véhicule (1), dans lequel au moyen du dispositif (7) selon l'une quelconque des revendications précédentes, au moins deux formes de réalisation différentes de coques de siège (2) sont fabriquées, qui se distinguent par une hauteur de joues latérales, en réglant la cavité (K) dans l'outil de moulage par injection (4) dans la zone de formage pour les joues latérales (6) en fonction de la forme de réalisation respective à fabriquer de la coque de siège (2).

5. Procédé selon la revendication 4, **caractérisé en ce que** la forme de réalisation de la coque de siège (2) est fabriquée avec des joues latérales (6) basses en agençant des inserts interchangeables (5) dans l'outil de moulage par injection (4), et la forme de réalisation de la coque de siège (2) est fabriquée avec des joues latérales (6) hautes en n'agençant pas d'inserts interchangeables (5) dans l'outil de moulage par injection (4) ou en agençant des inserts interchangeables (5) d'un autre type d'inserts interchangeables qui ont une hauteur (H) inférieure à celle des inserts interchangeables (5) utilisés pour fabriquer la forme de réalisation de la coque de siège (2) avec des joues latérales(6) basses.

6. Procédé selon la revendication 4 ou 5, **caractérisé en ce que** la coque de siège respective (2) est fabriquée en plaçant un produit semi-fini, notamment une tôle organique, dans l'outil de moulage par injection (4) et en injectant une masse de moulage par injection, notamment en une matière plastique, notamment en une matière plastique thermoplastique, afin de former au moins les joues latérales (6) de la coque de siège (2).

7. Procédé selon l'une quelconque des revendications 4 à 6, **caractérisé en ce que** l'injection de la masse de moulage par injection permet en outre de former des structures de renforcement, notamment des structures nervurées et/ou des structures en nid d'abeille, et/ou au moins un logement pour un élément rapporté à fixer sur le siège de véhicule (1).

8. Procédé selon l'une quelconque des revendications 4 à 7, **caractérisé en ce que** le produit semi-fini est chauffé jusqu'à ce qu'il devienne déformable avant d'être placé dans l'outil de moulage par injection (4), et est mis en forme avant d'être placé dans l'outil de moulage par injection (4) ou dans l'outil de moulage par inj ection (4) .
